(19)

**Europäisches Patentamt**

**European Patent Office**

**Office européen des brevets**

(11) **EP 4 607 307 A1**

(12) **EUROPEAN PATENT APPLICATION**

(43) Date of publication:
27.08.2025 Bulletin 2025/35

(21) Application number: 25155026.5

(22) Date of filing: 30.01.2025

(51) International Patent Classification (IPC):
*G05B 23/02* (2006.01)

(52) Cooperative Patent Classification (CPC):
**G05B 23/0267;** G05B 23/0272; G05B 23/0283

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 23.02.2024 GB 202402567

(71) Applicants:
• **Siemens Aktiengesellschaft**
**80333 München (DE)**
• **SIEMENS, S.A.**
**28760 Tres Cantos Madrid (ES)**

(72) Inventors:
• **Loach, James**
**Southampton, SO16 7NS (GB)**
• **Toutoungi, Danielle**
**Southampton, SO16 7NS (GB)**
• **Middleton, Lee**
**Southampton, SO16 7NS (GB)**
• **Perez Diaz, Alvaro**
**28760 Tres Cantosl, Madrid (ES)**

(74) Representative: **Siemens Patent Attorneys**
**Postfach 22 16 34**
**80506 München (DE)**

(54) **METHOD AND SYSTEM FOR PRESCRIPTIVE MESSAGING**

(57) A data processing system and methods for evaluating an operational condition of an asset are described. The asset is one of a plurality of assets that are monitored by a condition monitoring system. The condition monitoring system automatically issues alert messages based on the operational condition of the monitored assets. The methods use a trained large language model to generate output messages that provide a summary of contextually relevant content from feedback from previous alert messages in order to assist a user in evaluating an operational condition of an asset.

FIG 4

**Description**

TECHNICAL FIELD

The present disclosure relates to methods and systems for automated condition monitoring. In particular, the methods disclosed herein provide prescriptive messaging to help evaluate the condition of an asset.

BACKGROUND

In modern manufacturing industries reducing downtime and pre-empting machine failures is key to ensuring operational efficiency and reducing costs. Condition monitoring systems may be used to continuously monitor machines and alert machine operators and other users when unexpected behaviours are observed.

Traditionally, condition monitoring systems measured parameters such as vibration and temperature via sensors attached to a machine. The condition monitoring system would raise an alert when a sensor measurement exceeded an acceptable threshold level. As technology advanced, more sophisticated approaches to machine monitoring were developed. For example, predictive maintenance systems use data analytics tools on historical time series data and real-time sensor data to identify patterns and anomalies and pre-emptively alert users to potential impending problems. Predictive maintenance enables operators to intervene before equipment failures happen and, in turn, helps to reduce downtime and extend the lifespan of critical assets.

Some condition monitoring systems also provide prescriptive maintenance capabilities. In prescriptive maintenance systems the system does not merely provide an alert to pre-empt a problem, but also provides an indication of a likely cause of a problem. These systems provide feedback that enables users to make more informed maintenance decisions.

A number of distinct prescriptive messaging techniques have been developed. For example, some systems use predefined rules or thresholds. In these systems, the system designer or users can enter rules that indicate correspondence between patterns in the data and physical causes. For example, a user supervising an industrial robot in an automotive factory may encode the fact that long trends on robot torque measures indicate reducer failures.

From a system designer's perspective, one of the issues with this approach is that there are many different kinds of machines that can fail in a multitude of different ways. Furthermore, the way that failures show up in the data depends on how data is collected. For example, sensor data from even notionally equivalent sensors on identical automotive robots in different factories may look totally different. For users, identifying correspondences between patterns in data and physical causes requires work and knowledge which they may not possess. This reduces the benefits of a notionally automated system.

An alternative to specifying concrete rules is to provide the system with examples of failures, identified by users, from which detection algorithms can learn. For system designers, the problems are the same as rules-based systems, with the added complexity of questions over ownership and reuse of failure examples. For users, the functionality can be helpful, but it may be challenging for novice users. Furthermore, learning algorithms generally perform poorly with the small numbers of examples any user can reasonably identify. More generally, there is a gap between this kind of approach, which yields lists of failures following similar behaviour, and actual prescriptive messaging.

In another approach, the system may be integrated with a maintenance management system to automatically collect information on previous failures and their causes. Unfortunately, this also suffers from various issues. First, there is the complexity of the integration. There are many different kinds of maintenance management system that represent data in different ways. Second, these systems mark maintenance activities rather than failures as such, and it can be difficult to automatically determine which events are meaningful, and should be learned from, and which should be ignored. Finally, there is a similar issue of bridging the gap between lists of matches and prescriptive messaging.

SUMMARY

It is an object of the invention to provide a machine-agnostic, scalable method of prescriptive messaging without the need for explicit configuration by system designers or users.

The foregoing and other objects are achieved by the features of the independent claims. Further implementation forms are apparent from the dependent claims, the description and the figures.

According to a first aspect, a computer-implemented method for evaluating an operational condition of an asset in a plurality of assets is provided. The plurality of assets is monitored by a condition monitoring system and the condition monitoring system issues an alert message to a user based on an operational condition of an asset, stores a representation of the operational condition of the asset prior to the condition monitoring system issuing the alert message and stores feedback provided by the user in response to the alert message. The method comprises, in response to the condition monitoring system issuing a further alert message: obtaining a representation of an operational condition of an asset prior to the condition monitoring system issuing the further alert message; filtering a set of stored representations, based on the obtained representation and predefined filter criteria, to identify a subset of the set of stored representations; accessing the stored feedback from previous alert messages associated with the subset; and providing the feedback to a trained large language model to obtain an output message in a predefined format. The output message comprises a summary of contextually relevant content from the feedback from previous alert messages to assist a user in evaluating an operational condition of the asset associated with the further alert message.

The method according to the first aspect provides prescriptive messaging for condition monitoring of a plurality of assets without the need for explicit configuration by system designers or users.

In a first implementation form of the method according to the first aspect, filtering the set of stored representations to identify the subset, comprises: determining, for each of the stored representations, a similarity score, S, representing a similarity of the stored representation to the obtained representation and a relatedness score, R, representing a relation of the asset associated with the stored representation to the asset associated with the obtained representation; comparing, for each of the stored representations, the similarity score, S, and relatedness score, R, to predefined threshold values; and selecting one or more stored representations, based on the comparison, to form the subset.

In a second implementation form each representation comprises a list of items, wherein each item comprises an identifier of a data stream of operational data for the asset associated with the representation, and a data value.

In a third implementation for each item, the data value indicates that the operational data obtained from the data stream in a time period before the associated alert message: a) is marked by a detection algorithm as a data sequence of interest based on predefined detection criteria; or b) is correlated with operational data obtained from a further data stream of the asset, wherein the operational data obtained from the further data stream is marked by the detection algorithm as a data sequence of interest.

In a fourth implementation form determining, the similarity score, S, comprises: identifying a set of $N$ comparable data streams for the stored representation and the obtained representation, based on the identifiers of the stored representation and the identifiers of the obtained representation; forming a first vector of weights, $w_1 = (w_{1i})_{i=1}^{i=N}$, from the data values of comparable data streams of the stored representation and a second vector of weights, $w_2 = (w_{2i})_{i=1}^{i=N}$, from the data values of the comparable data streams of the obtained representation; and determining a weighted sum,

$$S = \sum \frac{w_{1i} \cdot w_{2i} \cdot s_i}{M}$$

wherein $s_i$ is a value indicative of a similarity of the operational data obtained from the comparable data streams of the stored representation and the obtained representation; and wherein $M$ is a scaling factor.

In a fifth implementation form for each stored representation, the relatedness score, R, is determined based on a distance in a hierarchy of assets, of the asset associated to the stored representation from the asset associated to the obtained representation.

In a sixth implementation form the relatedness score, R, is determined based on membership of a user-defined group of assets.

In a seventh implementation form the method according to the first aspect comprises, appending the output message to the further alert message; and communicating the further alert message to the user.

In an eighth implementation form the method according to the first aspect comprises displaying the further alert message to the user in a user interface.

In a ninth implementation form, the method according to the first aspect comprises receiving feedback, via a user input device, in response to the further alert message.

In a tenth implementation form, the large language model comprises a neural network model.

In an eleventh implementation form, the output message provides one or more underlying probable causes for the further alert message.

In a twelfth implementation form the large language model is a multimodal model.

In a thirteenth implementation form the feedback comprises one or more of image data, text data, video data or audio data.

In a fourteenth implementation form the method comprises providing further data retrieved from one or more data sources to the large language model.

These and other aspects of the invention will be apparent from the embodiment(s) described below.

BRIEF DESCRIPTION OF THE DRAWINGS

For a more complete understanding of the present disclosure, and the advantages thereof, reference is now made to the following descriptions taken in conjunction with the accompanying drawings, in which:

Figures 1 is a schematic diagram of a condition monitoring system, according to an example.

Figure 2 is an example of an alert message in a condition monitoring system.

Figure 3 shows a block diagram of a method for evaluating an operational condition of an asset, according to an example.

Figure 4 is a graphical representation of a method for evaluating an operational condition of an asset, according to an example.

Figure 5 is an example of an output message of a large language model.

DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms including technical and scientific terms used herein are to be interpreted as is customary in the art. It will be further understood that terms in common usage should also be interpreted as is customary in the relevant art and not in an idealized or overly formal sense unless expressly so defined herein.

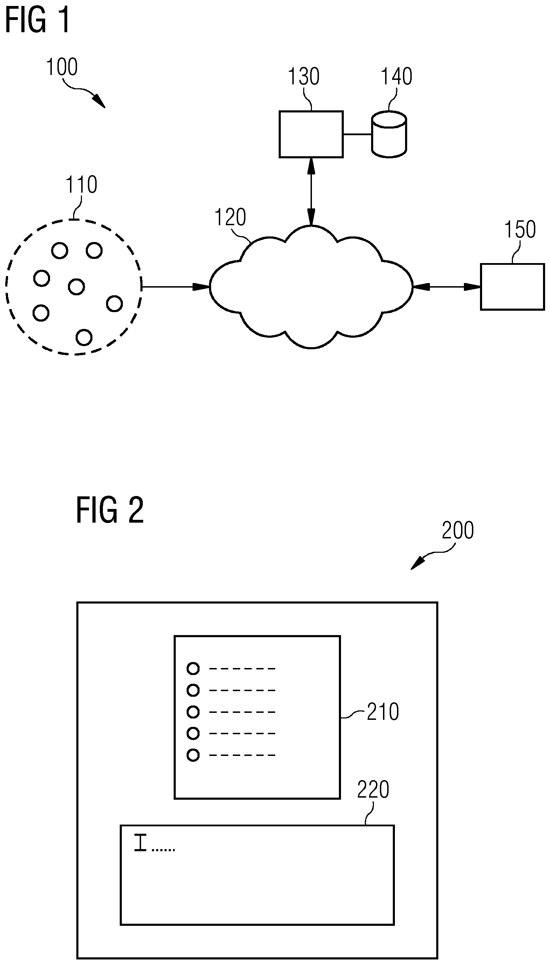

Figure 1 is a diagram showing an example of a condition monitoring system 100 on which the methods described herein may be implemented. Figure 1 depicts a collection of assets 110. The assets in the collection of assets 110 may include different kinds of industrial machines used in manufacturing industries including, but not limited to: machine tools such as lathes, milling tools, drilling tools; industrial robots such as welding robots, inspection robots, testing and validation robots; production line equipment such as belt conveyers, roller conveyers, packaging machines, sorting machines or supervisory systems and control systems such as distributed control systems, supervisory and data acquisition (SCADA) systems, Programmable logic control (PLC) systems, robotic control systems. An asset may also refer to a part of a machine.

Operational data may be obtained from each of the assets in the collection of assets. In the context of the present disclosure, "operational data" refers to information obtained from assets during operation. Operational data may comprise parameters which are measured via sensors connected to the asset. Sensors may include: temperature, pressure, humidity, optical or motion sensors. Operational data may be obtained from internet of things (IoT) devices such as smart devices or other remote monitoring systems. Operational data may also include metrics related to status, output or other performance-related metrics relating to an asset.

Assets may be grouped together in fleets. For example, assets may be grouped based on attributes such as model, make, function or type. In some cases, fleets of assets are determined on the basis of a user-defined grouping. In some examples, assets may be related via a hierarchy of assets. For example, a factory may comprise multiple production lines, where each production line comprises multiple assets or groups of assets.

Operational data obtained e.g. via sensors, may be communicated over local networks within a factory environment before being communicated over an external network 120. For example, data may be communicated locally over a Local Area Network (LAN), wireless sensor networks, industrial ethernet or Internet of thing (IoT) network, before being communicated to the external network 120, for example, via a server (not shown in Figure 1). The network 120 may be the internet, or another wireless are network (WAN), wireless LAN, cellular network or any other kind of network.

In Figure 1, the collection of assets 110 is monitored remotely by a server 130, via network 120. Server 130 is communicatively coupled to data storage 140. The server 130 is configured to monitor multiple data streams of operational data obtained from each asset and process the received data to evaluate the operational condition of the asset. Operational data and other information related to the assets may be stored by the server 130 in data storage 140.

A terminal 150 connects via network 120 with the server 130. The terminal 150 may be a user device such as a desktop, laptop, tablet, smartphone, thin client or similar. In examples described herein the terminal 150 may communicate with the server 130 via e.g. a web-based application hosted remotely on the server 130 or via dedicated software on the terminal 150. The application provides a user interface that enables a user to review information relating to assets such as operational data, alert messages, and maintenance events.

The arrangement of devices and entities depicted in Figure 1 is one possible arrangement. The skilled person would understand that other arrangements are possible and fall within the scope of the present disclosure. For example, the functions performed by the server 130 and the terminal 150 may be performed on a single device.

According to examples described herein, the server 130 raises alert messages based on the operational data received from the collection of assets 110. Alert messages may be communicated to the terminal 150, via the application. The server 130 may raise alert messages in response to unusual changes in sensor data, threshold violations, forecasted threshold violations, failure matches and other kinds of events.

Figure 2 shows an alert message 200 in a condition monitoring system, according to an example. The alert message 200 may be displayed in the user interface of the application on terminal 150. The alert message 200 may provide a user with a list of options 210 from which they may select an option on the most likely root cause of the alert, based on their own evaluation and the data presented to them. In addition the alert message 200 provides a box 220, enabling the user to enter feedback. In the example shown in Figure 2, the user is able to provide natural language feedback. In other examples, the user may provide visual data such as photographic data, video data, audio data or data in any other media format supported by the system. Both elements of the alert message are fed back to the server 120. The following may provide examples of feedback comments:

- *"Elevated reading, returned to normal condition after 10 mins"*

- *"Chain tension measured at 30mm. Chain re-tensioned to 10mm".*

- *"Spike in data may have been caused by a jammed hanger."*

- *"Instances of spikes in recorded data. Conveyor to be monitored".*

- *"Spikes caused by a loose chain, 25mm deflection. Chain tension adjusted down to 10mm deflection. "*

In addition to issuing an alert message the server 130 stores a representation of the operational data of the asset in a time period just before the alert message. The representation may comprise a list of items where each item comprises an identifier of a data stream associated with the asset, and information on the behaviour of the operational data. This information may record when specified types of behaviours are observed. Behaviours may be detected by a detection algorithm, which is arranged to apply predefined detection criteria to the operational data. The specified types may include: trends, unexpected level shifts or unusual bursts, as well as the orientation with respect to a base line such as up, down or mixed. For example, an unusual upward spike in the data obtained from a data stream named "Robot2-A" may be recorded as follows:

"Robot2-A": ("anomoly:up_spike", 1.0),

In a second example, data obtained from a second data stream named "Robot2-B" may be recorded as follows:

"Robot2-B": ("anomaly:up_spike", 0.65),

In the second example, rather than directly observing an anomalous spike, the data value of 0.65 is a correlation coefficient indicating that the data observed on the "Robot2-B" data stream is correlated with the up-spike anomaly from the "Robot2-A" data stream. The identifier, "Robot2-A" of the data stream which is most strongly correlated and showing one or more of the specified types of behaviours may also be recorded in the representation of the data stream "Robot2-B".

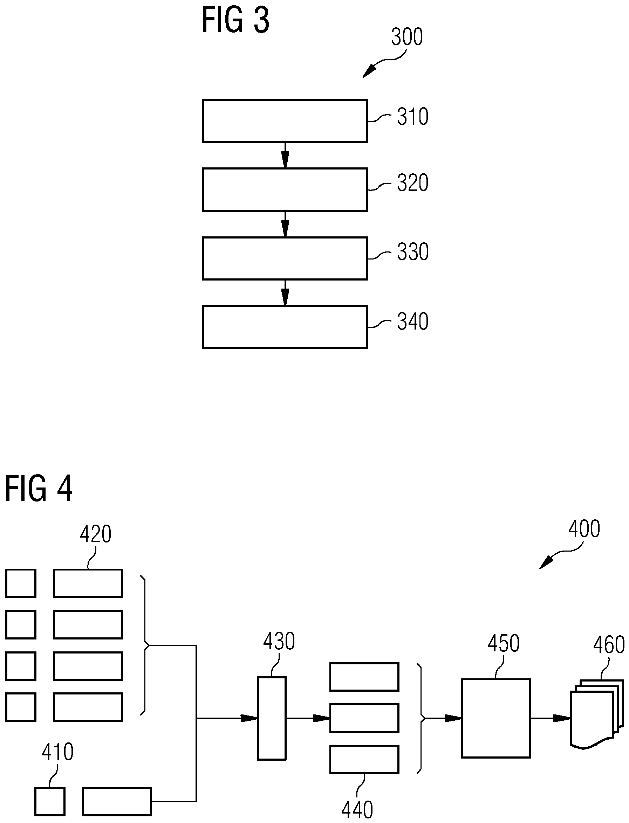

Figure 3 is a block diagram of a method 300 for evaluating an operational condition of an asset in a plurality of assets, according to an example. The method 300 may be used in conjunction with the other methods and systems described herein. In particular, the method 300 may be used in conjunction with the system 100 shown in Figure 1. More generally, the method 300 may be used in conjunction with any condition monitoring system that issues alert messages based on the operational condition of an asset and stores a representation of the operational condition prior to the condition monitoring system issuing the alert message with feedback provided by the user in response to the alert message.

At block 310, the method 300 comprises, in response to the condition monitoring system issuing a further alert message, obtaining a representation of an operational condition of an asset prior to the condition monitoring system issuing the further alert message. In examples the obtained representation may comprise a representation of operational data as a list of items, wherein each item identifies the type of behaviour observed on each of the data streams monitored by the condition monitoring system for the asset, as previously described herein.

At block 320, the method 300 comprises filtering a set of stored representations, based on the obtained representation and predefined filter criteria, to identify a subset of the set of stored representations. In examples described herein, the set of representations may be fileted by comparing the representation of the data prior to the most recent alert to representations from previous alerts. A similarity score, $S$, may be used to compare the representations. The similarity score, $S$, may be determined using data from the representations. For example, a representation of the operational data of an asset prior to the most recent alert may comprise a list of items as follows:

```
[
"Robot2-A": ("anomoly:up_spike", 1.0),
"Robot2-B": ("anomoly:up_spike", 0.65),
"Robot1-A": ("", 0.0),
"Robot1-B": ("", 0.0),
]
```

As in the previous examples, *"Robot2-A"*: ("anomaly:up_spike", 1.0), represents detection of an anomaly on a data stream named *"Robot2-A"* and *"Robot2-B"*: ("anomaly:up_spike", 0.65) represents a correlation between the data observed from data stream *"Robot2-B"* with data observed on *"Robot2*-A".

A representation from the same asset, but in respect of a previous alert, may comprise a second list of items, similar to the first list:

```
["Robot2-A": ("violation", 1.0),
"Robot2-B": ("anomoly:up_spike", 1.0),
"Robot1-A": ("", 0.0),
"Robot1-B": ("trend", 1.0),
]
```

In the second list, specific behaviours are recorded on three data streams for a time period prior to the previous alert: a violation on *"Robot2-A"*, an anomaly on "*Robot2-B*", and a trend *"Robot1-B"*.

The similarity score, $S$, for comparing the first and second representations may be determined as follows: a first weights vector $w_1 = [1.0, 0.65, 0.0, 0.0]$ is formed on the basis of the first representation, where each value corresponds to the value recorded with the data stream in the representation. Similarly, a second weight vector $w_2 = [1.0, 1.0, 0.0, 1.0]$ is formed on the basis of the second representation. The score, S, is computed as a weighted sum over the values of the vectors $w_1$ and $w_2$:

$$S = \sum \frac{w_{1i} \cdot w_{2i} \cdot s_i}{M}$$

In this sum the value $s_i$ is equal to 0, for data streams where a different kind of behaviour is observed, and 1 when the same kind of behaviour is observed. If a partial match is observed, such as similar but not identical kinds of anomalies, then $s_i$ is a value $0 < s_i < I$, such as 0.8. The value $M$ is determined on the basis of the number of data streams where any behaviour is observed. Applying the formula for S to the vectors $w_1$ and $w_2$:

$$S = \frac{(1.0 \times 1.0 \times 0 + 0.65 \times 1.0 \times 1 + 0.0 \times 0.0 \times 0 + 0.0 \times 1.0 \times 0)}{3}$$

In addition to the score, $S$, and relatedness score, $R$, of the assets associated with the representations may be computed. Highly related assets may be assets of the same type that are close to one another in a factory hierarchy of assets, or which belong to the same fleet of assets. For example, an $R$ value of 0 may be used to indicate that two representations are from the same assets, an $R$ value of 1 may indicate that representations are from assets at the same level in the hierarchy, and an $R$ level of 2 may indicate that assets are separated by one level in the hierarchy of assets. Minimum thresholds may be applied to $S$ and $R$ to discard unimportant representations. After this, up to $N$ representations are selected, with those with lowest $R$ values first. Within each $R$-level, representations with higher $S$ values are prioritised over those with lower $S$ values.

At block 330, the method 300 comprises accessing stored feedback from the previous alert messages associated with the subset. In other words, the text-based feedback as well as the possible cause selected by users in response to previous alert messages for the subset is retrieved. These alert messages were issued in response to similar behaviours on similar assets, and thus provide useful insights into the asset for which the most recent alert has been issued, and potential underlying causes of the alert.

At block 340, the method 300 comprises providing the feedback to a trained large language model to obtain an output message in a predefined format. The output message comprises a summary of contextually relevant content from the feedback from previous alert messages to assist a user in evaluating an operational condition of the asset associated with the further alert message. In examples described herein the format of the output message may comprise a headline for each possible cause of an alert, a description and a list of the associated alert messages. A variety of best-practice techniques may be used to control the language model and ensure robust, accurate output in an appropriate format.

The method 300 incorporates user feedback in response to alert messages issued by the condition monitoring system. Additionally, the methods and system described herein may incorporate feedback linked to different types of events. For example, work events created by users, maintenance events from a computerized maintenance management system (CMMS), or user notes appended to time series data captured by the condition monitoring system.

Figure 4 depicts a graphical representation of the method 300, according to an example. A representation 410 of the current alert message and the representations 420, associated with previous alert messages are passed through filter 430 to obtain a subset of representations. The feedback 440, associated with the subset of representations is passed to a language model 450. The language model 450 outputs a message 460 in a predefined format.

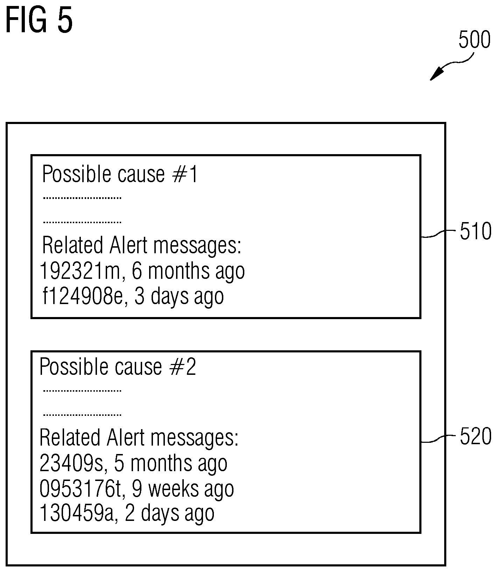

Figure 5 shows a first example of an output message 500 from the language model. In Figure 5, the output message identifies two possible causes 510, 520 For each cause 510, 520 the output message identifies previous alert messages associated with the cause and comprises a detailed description summarising the previous issues, The output message 500 may comprise additional information such as information identifying the assets associated with alerts.

In some cases, data from other data sources may be provided as additional input to the language model. These data sources may be external to the condition monitoring system and accessed remotely via a network. For example, sections of user manuals retrieved from an external database may be supplied to the language model. In other examples, codified expert knowledge may be provided to the language model. For example, a threshold violation or forecast threshold violation may be associated with a statement from a maintenance engineer such as 'if the current exceeds 10Amps there must be an issue with the fuse box'.

The output message from block 340 may also be appended to an alert message for the further alert. When the user closes the alert, they have an opportunity to leave feedback which can include comments on the quality of the prescriptive message. This is input to the language model whenever feedback from this alert is passed through the filter in future. This feedback loop is intuitive for users and provides an efficient method to seed expert knowledge into the system as part of their workflow.

The methods and systems described herein provide an improved condition monitoring system. The system does not require dedicated functionality for specifying this knowledge, such as mechanisms for entering rules, marking up data or integrating with a maintenance management system. This results in a system which is scalable and machine agnostic. The method for identifying similar behaviour before previous alerts is lightweight, pragmatic and intuitive for users to understand. Inputs to the large language model are selected to ensure that the output provides a coherent, useful summary with contextually relevant information. There is no need for a user to inspect lists of similar things to compose these summaries in their heads.

The present disclosure is described with reference to flow charts and/or block diagrams of the method, devices and systems according to examples of the present disclosure.

Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for evaluating an operational condition of an asset in a plurality of assets in a manufacturing environment, wherein the plurality of assets is monitored by a condition monitoring system and wherein the condition monitoring system issues an alert message to a user based on an operational condition of an asset, stores a representation of the operational condition of the asset prior to the condition monitoring system issuing the alert message and stores feedback provided by the user in response to the alert message, the method comprising, in response to the condition monitoring system issuing a further alert message:

> obtaining a representation of an operational condition of an asset prior to the condition monitoring system issuing the further alert message;
> filtering a set of stored representations, based on the obtained representation and predefined filter criteria, to identify a subset of the set of stored representations;
> accessing the stored feedback from the previous alert messages associated with the subset; and
> providing the feedback to a trained large language model to obtain an output message in a predefined format, wherein the output message comprises a summary of contextually relevant content from the feedback from previous alert messages to assist a user in evaluating an operational condition of the asset associated with the further alert message.

2. The method of claim 1, wherein filtering the set of stored representations to identify the subset, comprises:

> determining, for each of the stored representations, a similarity score, $S$, representing a similarity of the stored representation to the obtained representation and a relatedness score, $R$, representing a relation of the asset associated with the stored representation to the asset associated with the obtained representation;
> comparing, for each of the stored representations, the similarity score, $S$, and relatedness score, $R$, to predefined threshold values; and
> selecting one or more stored representations, based on the comparison, to form the subset.

3. The method of claim 2, wherein each representation comprises a list of items, wherein each item comprises an identifier of a data stream of operational data for the asset associated with the representation, and a data value.

4. The method of claim 3, wherein for each item, the data value indicates that the operational data obtained from the data stream in a time period before the associated alert message:

> a) marked by a detection algorithm as a data sequence of interest based on predefined detection criteria; or
> b) is correlated with operational data obtained from a further data stream of the asset, wherein the operational data obtained from the further data stream is marked by the detection algorithm as a data sequence of interest.

5. The method of claim 4, wherein determining, the similarity score, $S$, comprises:

> identifying a set of $N$ comparable data streams for the stored representation and the obtained representation, based on the identifiers of the stored representation and the identifiers of the obtained representation;
>
> forming a first vector of weights, $\boldsymbol{w}_1 = (w_{1i})_{i=1}^{i=N}$, from the data values of comparable data streams of the stored representation and a second vector of weights, $\boldsymbol{w}_2 = (w_{2i})_{i=1}^{i=N}$, from the data values of the comparable data streams of the obtained representation; and
> determining a weighted sum,

$$S = \sum \frac{w_{1i} \cdot w_{2i} \cdot s_i}{M}$$

> wherein $s_i$ is a value indicative of a similarity of the operational data obtained from the comparable data streams of the stored representation and the obtained representation; and
> wherein $M$ is a scaling factor.

6. The method of claim 2, wherein, for each stored representation, the relatedness score, $R$, is determined based on a distance in a hierarchy of assets, of the asset associated to the stored representation from the asset associated to the obtained representation.

7. The method of claim 2, wherein the relatedness score, $R$, is determined based on membership of a user-defined group of assets.

8. The method of claim 1, comprising:

appending the output message to the further alert message; and
communicating the further alert message to the user.

9. The method of claim 8, comprising displaying the further alert message to the user in a user interface.

10. The method of claim 9, comprising receiving feedback, via a user input device, in response to the further alert message.

11. The method of claim 1, wherein the output message provides one or more underlying probable causes for the further alert message.

12. The method of claim 1, wherein the large language model is a multimodal model.

13. The method of claim 1, wherein the feedback comprises at least one of image data, text data, video data or audio data.

14. The method of claim 1, comprising providing further data retrieved from one or more data sources to the large language model.

15. A data processing system arranged to monitor a plurality of assets in a manufacturing environment, to issue an alert message to a user based on an operational condition of an asset, to store a representation of the operational condition of the asset prior to the condition monitoring system issuing the alert message and to store feedback provided by the user in response to the alert message, wherein, in response to issuing a further alert message the data processing system is further arranged to:

obtain a representation of an operational condition of an asset prior to the condition monitoring system issuing the further alert message;
filter a set of stored representations, based on the obtained representation and predefined filter criteria, to identify a subset of the set of stored representations;
access the stored feedback from previous alert messages associated with the subset; and
provide the feedback to a trained large language model to obtain an output message in a predefined format, wherein the output message comprises a summary of contextually relevant content from the feedback from previous alert messages to assist a user in evaluating an operational condition of the asset associated with the further alert message.

16. A computer-implemented method for evaluating an operational condition of an asset in a plurality of assets in a manufacturing environment, wherein the plurality of assets is monitored by a condition monitoring system, wherein, in response to an event, the condition monitoring system stores a representation of the operational condition of an asset associated to the event, and feedback provided by the user in response to the event, the method comprising, in response to a further event:

obtaining a representation of an operational condition of an asset prior to the further event;
filtering a set of stored representations, based on the obtained representation and predefined filter criteria, to identify a subset of the set of stored representations;
accessing the stored feedback from previous events associated with the subset; and
providing the feedback to a trained large language model to obtain an output message in a predefined format, wherein the output message comprises a summary of contextually relevant content from the feedback from previous events to assist a user in evaluating an operational condition of the asset associated with the further event.

17. The method of claim 16, wherein the further event is a maintenance event or a user-invoked event.

## FIG 1

100

110

120

130

140

150

## FIG 2

200

210

220

FIG 3

300

310

320

330

340

FIG 4

400

420

410

430

440

450

460

# FIG 5

500

Possible cause #1

..........................

..........................

Related Alert messages:
192321m, 6 months ago
f124908e, 3 days ago

510

Possible cause #2

..........................

..........................

Related Alert messages:
23409s, 5 months ago
0953176t, 9 weeks ago
130459a, 2 days ago

520

Europäisches
Patentamt

European
Patent Office

Office européen
des brevets

# EUROPEAN SEARCH REPORT

**Application Number**

EP 25 15 5026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/072741 A1 (TEHINI LONY [CA] ET AL) 11 March 2021 (2021-03-11) * paragraphs [0020] - [0024]; figure 1 * ----- | 1-17 | INV. G05B23/02 |
| A | Steiny Sam ET AL: "The Great Unlock: Large Language Models in Manufacturing", databricks, 29 May 2023 (2023-05-29), pages 1-4, XP093251880, Retrieved from the Internet: URL:https://www.databricks.com/blog/great-unlock-large-language-models-manufacturing [retrieved on 2023-05-29] * chapter "More Prescriptive Field Service" * ----- | 1-17 | |

|  |  |  | TECHNICAL FIELDS SEARCHED (IPC) |
|---|---|---|---|
|  |  |  | G05B |

The present search report has been drawn up for all claims

| Place of search | Date of completion of the search | Examiner |
|---|---|---|
| Munich | 26 June 2025 | Heiner, Christoph |

EPO FORM 1503 03.82 (P04C01)

## ANNEX TO THE EUROPEAN SEARCH REPORT
## ON EUROPEAN PATENT APPLICATION NO.

EP 25 15 5026

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | Publication date | Patent family member(s) | | Publication date |
|---|---|---|---|---|
| US 2021072741 A1 | 11-03-2021 | CA | 3148727 A1 | 11-03-2021 |
| | | CN | 114341873 A | 12-04-2022 |
| | | EP | 4026073 A1 | 13-07-2022 |
| | | JP | 7460861 B2 | 03-04-2024 |
| | | JP | 2022546731 A | 07-11-2022 |
| | | US | 2021072741 A1 | 11-03-2021 |
| | | WO | 2021043998 A1 | 11-03-2021 |

EPO FORM P0459

For more details about this annex : see Official Journal of the European Patent Office, No. 12/82